# FASCICULE DE BREVET EUROPEEN

(11) **EP 3 918 378 B1**
(45) Date de publication et mention de la délivrance du brevet: **07.06.2023**
(21) Numéro de dépôt: 20701652.8
(22) Date de dépôt: 30.01.2020
(51) Int. Cl.: G01V 3/12, G01V 3/10, G01S 13/88, G01S 13/87, G01S 13/00, G01V 11/00, G01V 8/10, G01N 24/08

(54) **DÉTECTEUR POUR L'INSPECTION DE BAGAGES**
DETEKTOR FÜR DIE GEPÄCKINSPEKTION
DETECTOR FOR LUGGAGE INSPECTION

(30) Priorité: 30.01.2019 FR 1900853
(43) Date de publication de la demande: 08.12.2021
(73) Titulaire: Manneschi, Alessandro, 52100 Arezzo (IT)
(72) Inventeur: Manneschi, Alessandro, 52100 Arezzo (IT)
(74) Mandataire: Regimbeau
(86) Numéro de dépôt international: PCT/EP2020/052335
(87) Numéro de publication internationale: WO 2020/157223

(56) Documents cités:
- EP-A1- 3 372 188
- CN-A- 107 991 327
- US-A- 5 001 425
- US-A- 5 659 247
- US-A1- 2012 121 070

## Description

### DOMAINE TECHNIQUE

La présente invention concerne le domaine des détecteurs conçus pour la détection d'objets ou matières non autorisés dans une zone à accès protégé.

Plus particulièrement, la présente invention concerne un détecteur destiné à la recherche d'objets interdits contenus dans des bagages.

La présente invention s'applique tout particulièrement aux contrôles d'accès à des sites recevant un public nombreux dans un laps de temps court, par exemple des enceintes ou stades de sport ou encore des salles ou enceintes de spectacles.

L'invention n'est cependant pas limitée à ces applications particulières et vise le contrôle d'accès à tout site, par exemple des gares, des écoles, des magasins, etc.

### ARRIERE PLAN TECHNOLOGIQUE

L'examen d'individus accédant à des zones à accès protégé a fait l'objet de nombreuses propositions.

On connaît des détecteurs de métaux, notamment des portiques détecteurs de métaux utilisant des bobinages qui procèdent par une détection de nature inductive.

On connaît encore des scanners corporels utilisant des technologies d'examen à base de micro-ondes.

On connaît par ailleurs, bien entendu, des palpations physiques d'individus, par des opérateurs/opératrices habilités lors du passage par des portes ou zones d'accès.

On connait aussi les systèmes d'inspection de bagages à rayons X qui sont bien utiles pour la visualisation de masses radio-opaques, par exemple métalliques, mais qui ont des fortes limites de visualisation sur les masses diélectriques, voir explosives, qui ont parfois de caractéristiques d'atténuation des rayons X similaires à celles des matériaux non-métalliques communs. Un autre inconvénient des scanners à rayon X est la difficulté de les déplacer sur différents sites d'utilisation car à chaque nouvelle installation ils demandent une vérification du rayonnement dispersé par un spécialiste compétent. En plus les scanners à rayon X pour le contrôle des bagages ne sont pas capables de détection automatique des armes métalliques et des explosifs et, par conséquent, demandent un opérateur en permanence pour la vérification des images et entrainent un cout d'exploitation élevé. Enfin, le cout de maintenance est aussi élevé à cause de la nécessité de remplacement périodique de la bande transporteuse et de la source à vide du rayonnement X.

Tous les systèmes connus souffrent cependant d'inconvénients. La fiabilité de certains systèmes connus laisse parfois à désirer.

De nombreux systèmes connus sont lents, en ce sens qu'ils ne permettent pas un flux ou débit de passage d'individus important.

En conclusion, les systèmes connus conduisent souvent à des problèmes de sécurité et à un inconfort du public concerné.

Le document US 2012/121070 décrit un système de détection d'objets interdits comprenant un convoyeur configuré pour recevoir un objet à inspecter et des moyens de détection à base de rayonnements électromagnétiques, ainsi qu'un détecteur placé à l'entrée du convoyeur afin de bloquer ou d'éteindre les rayonnements électromagnétique lorsqu'un élément invasif, tel qu'une main, est détecté. Le détecteur permet ainsi de protéger les opérateurs.

Les documents US 5 001 425 , US 2012/121070, EP 3 372 188 et US 5 659 247 décrivent des détecteurs de métaux configurés pour être placés à l'entrée d'une poubelle afin d'éviter que le personnel médical ne jette accidentellement des instruments chirurgicaux à la poubelle.

Le document CN 107 991 327 décrit une consigne comprenant des moyens d'inspection et éventuellement des moyens de verrouillage afin d'inspecter un bagage déposé dans la consigne.

### RESUME DE L'INVENTION

Dans ce contexte, la présente invention a pour but de proposer de nouvelles solutions d'analyse de bagages optimisées pour augmenter la fiabilité, la sécurité et le flux de passage d'individus.

L'invention a également pour but d'éviter l'utilisation de rayonnements ionisants, reconnus comme étant souvent dangereux pour la santé, notamment pour les populations formées par des enfants et des femmes enceintes.

Les buts précités sont atteints selon la présente invention grâce à un système de détection d'objets interdits contenus dans un bagage et un procédé de détection associé conformes aux revendications indépendantes annexées. Des modes de réalisation font l'objet des revendications dépendante.

En particulier, le système comprend un chariot définissant un logement pour recevoir un bagage et des moyens d'examen placés à l'entrée du logement, de sorte que l'introduction du bagage dans le logement induit un déplacement relatif entre le bagage et les moyens d'examen et donc un balayage automatique du bagage par les moyens d'examen.

Comme on le comprendra à la lecture de la description qui va suivre, la structure proposée selon la présente invention qui place les moyens d'examen à l'entrée du logement de réception, permet de garantir un balayage complet du bagage sans exiger une instruction particulière à l'attention du propriétaire du bagage, ni une intervention ou manipulation complexe de sa part. Le dispositif conforme à la présente invention procédant par ailleurs par détection à distance sans contact mécanique sur le bagage permet de garantir la parfaite intégrité du bagage.

Selon une autre caractéristique avantageuse de l'invention, le chariot définit une cavité ouverte vers le haut pour recevoir un bagage et englober intégralement celui-ci et des moyens d'examen placés sur et dans les parois de la cavité de sorte que le bagage est examiné complètement par les moyens d'examen lorsqu'ils reposent sur le fond de la cavité.

Disposer d'une cavité qui englobe intégralement le bagage permet de garantir un examen complet de la totalité du bagage. Mais cela permet également de protéger le bagage pendant le temps où son propriétaire l'abandonne pour permettre l'examen. Ceci permet de rassurer le propriétaire et de le convaincre de confier son bagage au dispositif d'examen. Ceci permet également en parallèle de soumettre le propriétaire porteur du bagage à un examen additionnel, par exemple de soumettre le porteur du bagage à un portique détecteur, par exemple détecteur de métaux, afin de détecter d'éventuels objets ou matières non autorisés portés par l'individu contrôlé.

Selon d'autres caractéristiques avantageuses de l'invention :
- le logement ou cavité a une géométrie parallélépipédique rectangle,
- le chariot est équipé de roulettes,
- le logement ou cavité a des dimensions au moins égales à 460mm x 250mm x 400mm, et de préférence jusqu'à 550mm x 300mm x 480mm,
- les moyens d'examen comprennent des moyens exploitant plusieurs technologies différentes,
- les moyens d'examen sont choisis dans le groupe comprenant : des moyens détecteurs de métaux par induction, des moyens micro-ondes détecteurs de matière non-métallique notamment d'explosifs, des moyens détecteurs de présence et des moyens de mesure de masse,
- les moyens d'examen comprennent de préférence des moyens de mesure de dimension des bagages,
- les moyens d'analyse comprennent de préférence des moyens de normalisation des signaux issus de détecteurs micro-ondes en fonction de la largeur de bagages détectée,
- les moyens détecteurs de métaux sont placés dans les grands côtés verticaux du logement ou cavité,
- les moyens détecteurs micro-ondes sont composés d'au moins deux séries d'émetteurs/récepteurs associés à des cornets respectifs, disposées sur deux côtés opposés du logement ou cavité, de préférence quatre séries de tels émetteurs/récepteurs associés à des cornets respectifs disposées respectivement sous forme de deux paires au niveau de l'ensemble des côtés du logement ou cavité, plus précisément sur l'embouchure d'ouverture de celui-ci.

La présente invention concerne également un procédé de détection d'objets interdits contenus dans un bagage, caractérisé par le fait qu'il comprend l'étape consistant à placer un bagage dans un logement d'un chariot équipé de moyens d'examen placés à l'entrée du logement, de sorte que l'introduction du bagage dans le logement induit un déplacement relatif entre le bagage et les moyens d'examen et donc un balayage automatique du bagage par les moyens d'examen.

Selon une autre caractéristique avantageuse de l'invention, le procédé consiste à placer le bagage dans une cavité ouverte vers le haut pour recevoir un bagage et englober intégralement celui-ci, de sorte que le bagage est examiné complètement par les moyens d'examen lorsqu'il repose sur le fond de la cavité.

Selon une autre caractéristique avantageuse de l'invention, le procédé met en oeuvre un chariot équipé d'un logement et/ou cavité, en combinaison avec un portique détecteur de métal adapté pour scanner le corps d'un individu.

### BREVE DESCRIPTION DES FIGURES

D'autres caractéristiques, buts et avantages de la présente invention apparaîtront à la lecture de la description détaillée qui va suivre, et en regard des dessins annexés, donnés à titre d'exemples non limitatifs et sur lesquels :
La figure 1 représente une vue en perspective d'un chariot conforme à la présente invention,
Les figures 2, 3 et 4 représentent respectivement trois vues de dessus et latérale avant et latérale de côté du chariot illustré sur la figure 1,
La figure 5 représente une vue partielle en vue éclatée d'un chariot conforme à la présente invention mettant en évidence certains des éléments d'examen intégrés au chariot,
La figure 6 représente une autre vue éclatée du chariot conforme à la présente invention,
La figure 7 représente une vue schématique en coupe verticale d'un chariot conforme à la présente invention, selon un plan de coupe transversal,
La figure 8 représente une deuxième vue en coupe verticale du même chariot selon un plan de coupe longitudinal orthogonal à celui de la figure 7,
La figure 9 représente une vue en perspective d'un support plan supportant des émetteurs/récepteurs et des cornets associés micro-ondes conformes à l'invention ainsi qu'une unité centrale d'analyse,
La figure 10 représente schématiquement les étapes principales du procédé de détection conforme à la présente invention,
La figure 11 représente schématiquement l'implantation d'un chariot conforme à la présente invention en combinaison avec un portique détecteur de métaux, et
Les figures 12, 13, 14, 15 et 16 représentent cinq étapes successives d'utilisation du chariot conforme à la présente invention.
La figure 17 est un organigramme illustrant des étapes d'un exemple de procédé de détection selon un mode de réalisation de l'invention.

### DESCRIPTION DETAILLE D'UN MODE DE REALISATION

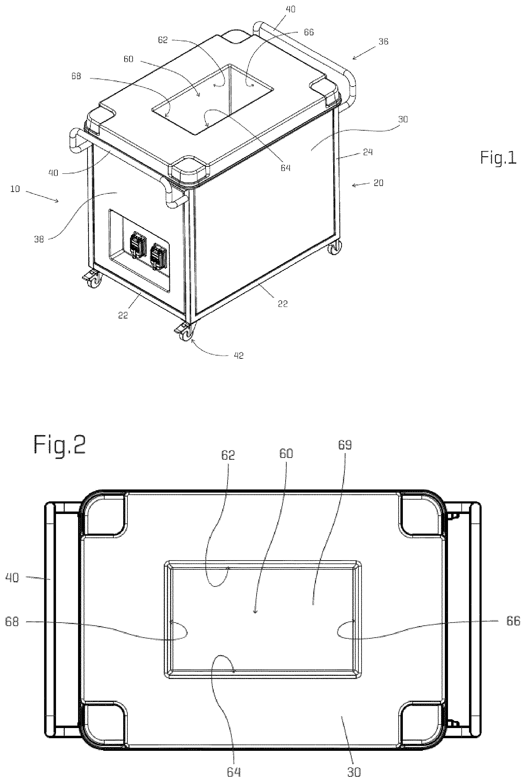

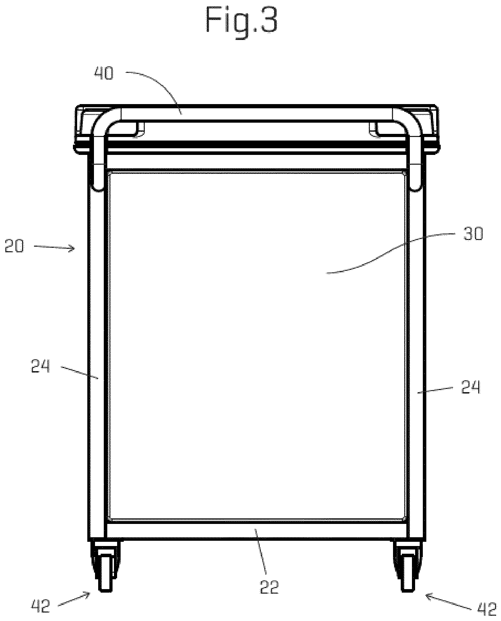

On aperçoit sur les figures annexées, notamment sur les figures 1, 2, 3 et 4, un chariot 10 conforme à la présente invention comprenant un cadre 20 formé par un ensemble de longerons longitudinaux ou transversaux 22 et de montants 24 équipés d'un carénage ou habillage 30.

Le chariot 10 qui a une enveloppe globalement en forme de parallélépipède rectangle peut faire l'objet de très nombreux modes de réalisation quant à la structure de ce cadre 20 et de son carénage externe 30. Il ne sera donc pas décrit dans le détail par la suite à cet égard.

De préférence, le chariot 10 est équipé de poignées 40 aidant à son déplacement et sa manipulation.

Par ailleurs, comme on le voit sur les figures, de préférence le chariot 10 est muni à sa base et au niveau de chacun de ses angles d'une roulette 42 blocable et orientable, afin de faciliter le déplacement du chariot.

L'ensemble du cadre 20 et du carénage externe 30 définissent au centre du chariot creux, un logement ou cavité 60 ouverte vers le haut.

La cavité 60 a de préférence la géométrie d'un parallélépipède rectangle.

Les dimensions de la cavité 60 sont de préférence au moins égales à 460mm en longueur, 250mm en largeur et 400mm en hauteur et de préférence jusqu'à 550mm en longueur x 300mm en largeur x 480mm en hauteur.

Le déposant a déterminé que ces dimensions étaient optimales pour accueillir en englobant totalement l'ensemble des bagages susceptibles d'être portés et utilisés par des individus susceptibles d'accéder à un large spectre de sites publics, par exemple de sites sportifs ou de spectacles.

Le logement ou cavité est délimité par une paroi de fond 69 et au moins une paroi latérale. L'au moins une paroi latérale comprend une partie inférieure raccordée à la paroi de fond et une supérieure partie opposée à la partie inférieure et formant une ouverture débouchante.

Par exemple, le logement peut être délimité par quatre parois latérales 62, 64, 66, 68. La paroi de fond 69 et l'au moins une paroi latérale 62, 64, 66, 68 sont disposées sur l'intérieur du carénage et sont de préférence planes et de contour rectangulaire : deux parois 62, 64 s'étendent longitudinalement et verticalement, parallèlement l'une à l'autre, et deux parois 66, 68 s'étendent transversalement et verticalement parallèlement l'une à l'autre et orthogonalement aux parois précitées 62, 64. Les parois latérales sont en outre globalement perpendiculaires à la paroi de fond 69, horizontale.

Comme on l'a indiqué précédemment, le chariot 10 est équipé de moyens d'examen exploitant une pluralité de technologies. Il s'agit selon l'invention de technologies d'examen sans contact. Cela permet de garantir l'intégrité totale du bagage et de procéder à son analyse complète sans exiger l'ouverture du bagage.

Plus précisément encore, de préférence, le chariot 10 conforme à l'invention comprend des moyens détecteurs de métal 100, des moyens 200 à base de micro-ondes adaptés pour l'identification de matériaux contenus dans le bagage examiné notamment d'explosifs, des moyens 300 de mesure de masse du bagage et le cas échéant des moyens de détection de la présence d'un bagage dans la cavité 60 et/ou de mesures des dimensions du bagage.

Les moyens détecteurs de métaux 100 sont de préférence formés de bobines procédant par détection inductive, placées dans des panneaux latéraux verticaux 32, 34 du chariot, situés parallèlement aux parois longitudinales 62, 64, entre celles-ci et le carénage externe 30. Les bobinages placés dans les panneaux 32, 34 sont alternativement émetteur et récepteur pour émettre un champ magnétique et détecter l'influence de pièces métalliques situées dans les bagages contrôlés, notamment par émission de courant de Foucault lors du déplacement relatif entre le bagage et les bobinages et/ou par modification de la fréquence et de la phase du champ magnétique détecté.

La technologie de tels détecteurs de métaux est bien connue en soi de l'homme du métier et ne sera donc pas décrite dans le détail par la suite.

De préférence les panneaux 32, 34 et les bobinages intégrés dans ces panneaux couvrent au moins toute la surface des parois longitudinales 62, 64 de la cavité 60 pour garantir un examen complet du bagage.

Cependant chaque bobinage peut être composé de plusieurs spires couvrant chacune individuellement une partie seulement de la surface de ces parois 62, 64.

Les moyens 200 détecteurs de matière et notamment d'explosifs, à base de micro-ondes sont formés de préférence d'une pluralité de moyens émetteurs/récepteurs micro-ondes 202 associés à des cornets formant antennes respectifs 204.

Les moyens 200 sont ainsi disposés sous forme de deux paires d'ensembles de transducteurs 210, 212 et 220, 222 disposés respectivement en vis-à-vis. Une première paire d'ensemble de transducteurs 200, référencés respectivement 210 et 212, sont placés en vis-à-vis sur les parois longitudinales 62, 64 de la cavité 60. Une deuxième paire d'ensemble de transducteurs 200, référencés respectivement 220 et 222, est placée en vis-à-vis sur les parois transversales 66, 68 de la cavité 60.

A titre d'exemple non limitatif, il peut être prévu une rangée 210, 212 de cinq transducteurs micro-ondes émetteurs/récepteurs 202 sur chacun des deux grands côtés 62, 64 du chariot et une rangée 220, 222 de trois transducteurs micro-ondes 202 sur chacun des deux petits côtés 66, 68 du chariot.

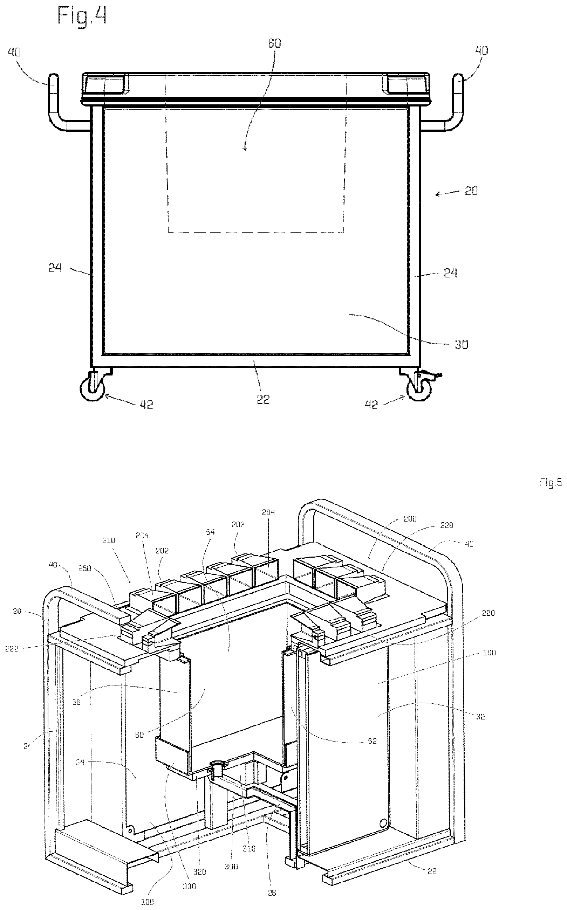

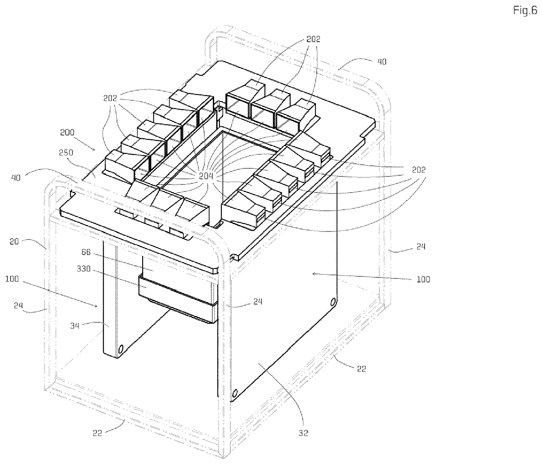

Plus précisément encore, comme on le voit sur les figures annexées, notamment sur les figures 5 et 6, ces transducteurs micro-ondes 202 associés à un cornet respectif 204 sont disposés au niveau du contour d'ouverture de la cavité 60, soit au sommet de celle-ci. Ainsi lorsqu'un bagage est introduit dans la cavité 60, il est déplacé en regard des transducteurs 200, de sorte que l'introduction du bagage dans le logement 60 induit un déplacement relatif entre le bagage et ces moyens d'examen 200 et donc un balayage automatique de l'intégralité du bagage par les moyens d'examen 200. Ce balayage est opéré sans exiger une instruction particulière à l'attention du propriétaire du bagage, ni une intervention ou manipulation complexe de sa part.

Plus précisément sur les figures 5 et 6, on a référencé 202 chacun des moyens transducteurs formant successivement émetteurs/récepteurs micro-ondes proprement dit, associés à un cornet 204 de focalisation.

Les transducteurs 202 opèrent de préférence dans une gamme de fréquence comprise entre 5 et 30 GHz et très préférentiellement entre 12 et 20 GHz.

Les différents transducteurs 202 situés sur un côté du contour d'ouverture de la cavité 60 sont situés respectivement coaxialement à un transducteur 202 situé en regard sur le panneau opposé.

Chaque transducteur 202 peut sous le contrôle d'une unité centrale travailler alternativement en émetteur ou en récepteur ou en émetteur et récepteur.

Les rayons transmis entre un émetteur 202 situé sur un premier panneau en direction d'un récepteur 202 situé sur le panneau opposé, qui ne sont pas occultés par un bagage ou objet intercalé parviennent sur les récepteurs avec un léger retard dû à la transmission dans l'air, sans atténuation notable en amplitude.

En revanche, les rayons émis par un émetteur 202 en direction d'un objet ou d'un bagage, peuvent être arrêtés ou atténués par celui-ci et ne peuvent pas parvenir sans altération au récepteur 202 en regard.

Le pilotage des couples émetteurs/récepteurs 202 et de l'analyse des signaux issus d'un récepteur 202, permet donc de détecter la présence d'un bagage et/ou d'un objet particulier au sein du bagage, non perméable aux micro-ondes.

Selon la nature des matériaux intercalés sur le trajet des faisceaux micro-ondes, certains des rayonnements micro-ondes peuvent être réfléchis vers l'émetteur, notamment en présence de certains métaux.

Les rayons micro-ondes qui sont transmis entre un émetteur 202 et un récepteur 202, sans être occultés par un bagage ou un objet non perméable aux micro-ondes, parviennent au récepteur 202 en regard pratiquement sans retard et sans atténuation notable en amplitude, le retard dépendant seulement de la célérité des micro-ondes dans l'air.

Lorsque le matériau intercalé sur le trajet d'un rayonnement micro-ondes n'est que partiellement opaque aux micro-ondes, les différentes interfaces de ce matériau peuvent générer des échos successifs qui sont réfléchis vers l'émetteur avec des retards différents et la partie transmise du même rayonnement parvient au récepteur avec un retard et une atténuation qui sont fonction de la constante diélectrique complexe du matériel, de la fréquence de l'onde et de l'épaisseur du matériel traversé par l'onde.

L'analyse des signaux ainsi détectés sur les récepteurs 202, par rapport à des signaux de référence, permet de détecter des objets frauduleux introduits dans un bagage examiné et d'en déterminer la nature.

L'homme de l'art comprend en effet que la détection de substances frauduleuses non métalliques, par exemple d'explosifs ou de drogue, logées dans un sac, peut être opérée par détection du retard et de l'amplitude des signaux micro-ondes transmis à travers la substance et/ou réfléchis par la substance.

Les moyens d'analyse conformes à l'invention procèdent de préférence par comparaison des signaux transmis et/ou réfléchis, avec des valeurs de signaux transmis dans l'air et/ou de signaux réfléchis sur des parois de bagages en un matériau connu non dangereux ou encore des signaux de référence obtenus par examen de matériaux tests de nature connue.

Les moyens d'analyse sont adaptés pour générer une alarme lorsqu'un écart significatif dépassant un seuil est détecté par rapport aux valeurs de référence.

Les moyens d'analyse sont de préférence adaptés pour réaliser au moins l'une des étapes suivantes, et de préférence la combinaison de l'ensemble des étapes suivantes :
- mesure du retard et de l'amplitude d'une transmission directe des micro-ondes entre chaque paire d'émetteurs et récepteurs 202 coaxiaux situés sur deux panneaux opposés,
- mesure du retard et de l'amplitude de l'onde micro-onde émise par chaque transducteur émetteur 202 et réfléchie vers le même transducteur formant récepteur 202,
- détection de la présence d'un double écho d'ondes micro-ondes réfléchie par une substance frauduleuse,
- comparaison des ondes micro-ondes transmise directement avec une valeur de référence de transmission dans le vide et transmission d'une alarme en cas de détection de retard supérieure à un seuil et avec une amplitude correspondant à une gamme de substance qui retarde et atténue les micro-ondes.

Les moyens d'analyse peuvent notamment comprendre un calculateur de type processeur, microprocesseur, microcontrôleur, etc., configuré pour exécuter des instructions.

Le procédé conforme à l'invention peut exploiter la comparaison d'un double écho détecté avec des valeurs de transmission dans le vide et la génération d'une alarme en cas de détection d'un retard supérieur à un seuil entre les pics des deux échos avec une amplitude supérieure à un seuil (représentatif d'une substance qui réfléchit une part de l'onde (premier écho) et qui retarde et atténue le signal non réfléchi (deuxième écho).

Dans le cadre de l'invention, les moyens émetteurs micro-ondes et récepteurs micro-ondes 202, peuvent être adaptés par ailleurs pour exploiter non seulement le signal provenant d'un récepteur coaxial 202 situé en regard mais également pour exploiter les signaux provenant des autres émetteurs/récepteurs 202, encadrant l'émetteur coaxial en regard.

Dans le cadre de l'invention, le logement ou cavité 60 peut en outre être équipé de moyens de détection de présence d'un bagage dans le logement ou cavité 60.

De tels moyens de détection peuvent être formés à base de cellules optiques émetteurs/récepteurs.

De tels moyens peuvent également être constitués de moyens détecteurs infra-rouges.

Plus précisément encore, de tels moyens émetteurs/récepteurs infra-rouges peuvent être utilisés en exploitant le temps du trajet aller/retour d'un rayonnement infrarouge réfléchi par un bagage pour mesurer les dimensions du bagage placé dans le logement ou cavité 60.

Connaissant les dimensions du bagage ainsi détectées, les moyens d'analyse peuvent procéder à une normalisation de l'analyse, c'est-à-dire du signal de sortie issu des transducteurs micro-ondes 200, et/ou du signal issu du détecteur de métal, par rapport à une unité de taille de largeur standard.

Cette normalisation qui permet de connaitre les propriétés d'absorption de micro-ondes du matériau détecté pour une valeur d'espace ou de dimension unitaire standard, permet d'améliorer la fiabilité du système en améliorant la qualité de la détection de la nature du matériau présent dans le bagage.

A cette fin, on peut prévoir plusieurs paires de moyens émetteurs infrarouge et de moyens récepteurs infrarouge associés placés de chaque côté de la cavité 60 de sorte que les rayons infrarouges émis par chaque moyen émetteur infrarouge se réfléchisse sur un bagage avant de parvenir aux moyens récepteurs infrarouge associés placés sur le même côté de la cavité.

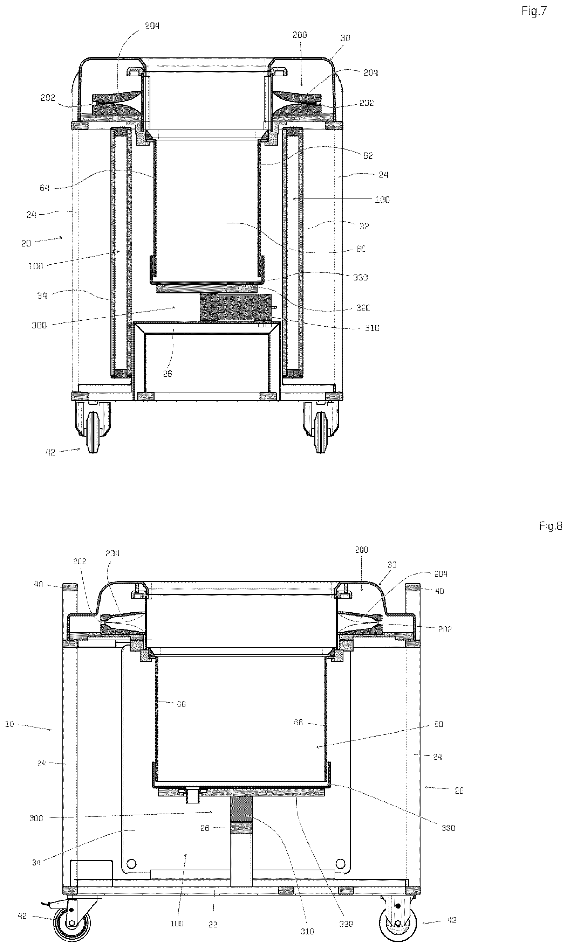

Comme on l'a indiqué précédemment, le chariot 10 conforme à la présente invention est de préférence équipé par ailleurs de moyens de pesée permettant de connaître la masse du bagage introduit dans la cavité 60. Ces moyens sont illustrés notamment sur les figures 7 et 8.

Ces moyens de pesée ou mesure de masse peuvent également servir de détecteur de présence du bagage dans la cavité 60.

Cette masse peut également être utilisée pour normaliser les signaux détectés par le détecteur de métal intégré dans les panneaux 32 34, ainsi que le signal de sortie des transducteurs micro-ondes 200.

Les moyens de pesée peuvent faire l'objet de nombreux modes de réalisation.

De préférence, ces moyens 300 comprennent comme illustré sur les figures 5, 6, 7 et 8 une jauge de contraintes 310 intercalée entre un support 26 solidaire de la base du chariot 10 et un plateau horizontal 320 lié au fond 330 de la cavité, lequel fond 330 est susceptible de débattement vertical par rapport aux parois verticales 62, 64, 66 et 68 de la cavité 60.

Le plateau 320 est solidaire de la paroi de fond 69 précitée de la cavité 60.

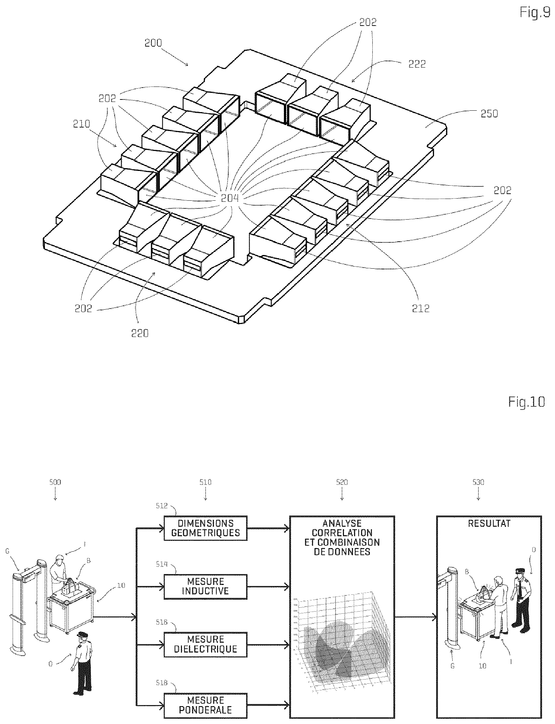

La figure 9 représente une base 250 qui porte les quatre matrices 210, 212, 220 et 222 de transducteurs micro-ondes 202 associés à des cornets de focalisation respectifs 204. Cette base 250 peut porter l'unité centrale de traitement des signaux.

Le chariot conforme à la présente invention peut être équipé de tout moyen de détection additionnel utile, par exemple des moyens de prélèvement et d'analyse de substance, vapeur ou de traces de particules et/ou des moyens d'analyse type résonnance magnétique nucléaire, des moyens d'analyse d'impédance complexe et/ou des moyens détecteurs de radiations radioactives.

De tels moyens sont connus en soi dans leur structure générale et ne seront donc pas décrits plus en détail par la suite.

Le chariot conforme à la présente invention peut être muni de moyens de signalisation de type sonore ou lumineux pour générer des alarmes.

Les moyens d'analyse conformes à la présente invention, sont de préférence adaptés pour programmer la sensibilité du moyen détecteur de métal 100 et des moyens détecteurs micro-ondes 200.

La programmation du moyen détecteur de métal 100 permet notamment de régler sélectivement la sensibilité pour une détection de composition métallique magnétique et/ou non magnétique. Elle permet également de contrôler la sensibilité en fonction de la taille seuil sélectionnée pour les objets métalliques recherchés.

Il en est de même pour le réglage de la sensibilité des transducteurs micro-ondes 200 qui permet d'adapter la détection aux caractéristiques diélectriques recherchées, notamment celles d'explosifs.

Le chariot de détection 10 conforme à la présente invention peut avantageusement être combiné avec un portique détecteur de métal G.

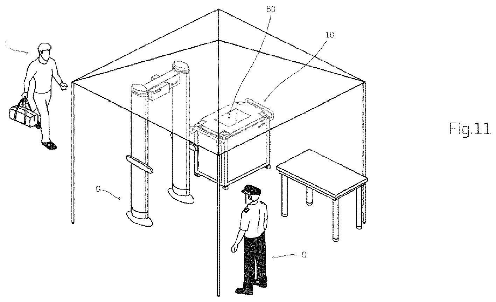

On a illustré cette disposition sur les figures 11 à 16.

Sur la figure 11, on aperçoit en effet un chariot 10 placé adjacent à un portique détecteur de métal G.

Un tel portique détecteur de métal G est connu en soi. Il ne sera donc pas décrit dans le détail par la suite.

On notera que de préférence le chariot 10 est orienté avec sa grande dimension perpendiculaire à la direction de transit à travers le portique G comme illustré sur les figures 11 à 16.

Cette disposition permet de minimiser le couplage électromagnétique entre le portique G et les moyens émetteurs/récepteurs inductifs de détection intégrés au chariot 10 pour examen de bagages. Cette disposition permet également de faciliter l'insertion et le retrait d'un bagage dans la cavité 60 sur le côté du portique G par une personne en transit à travers ce portique.

La figure 11 montre un individu I équipé d'un bagage B en approche d'un point de contrôle.

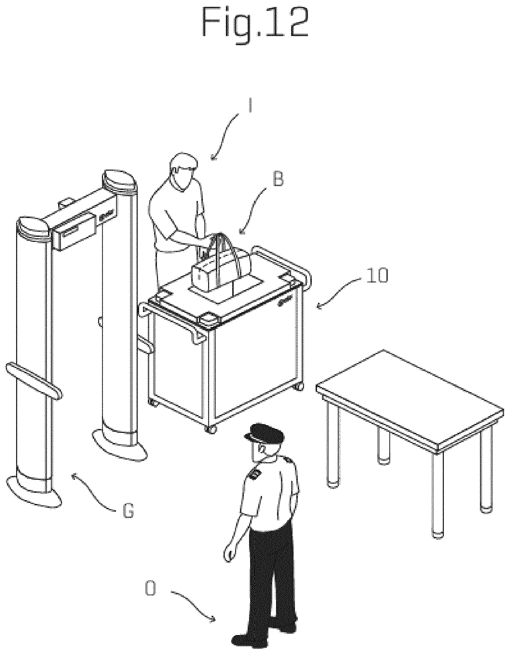

La figure 12 représente l'individu I introduisant le bagage B dans la cavité 60 du chariot 10 conforme à l'invention.

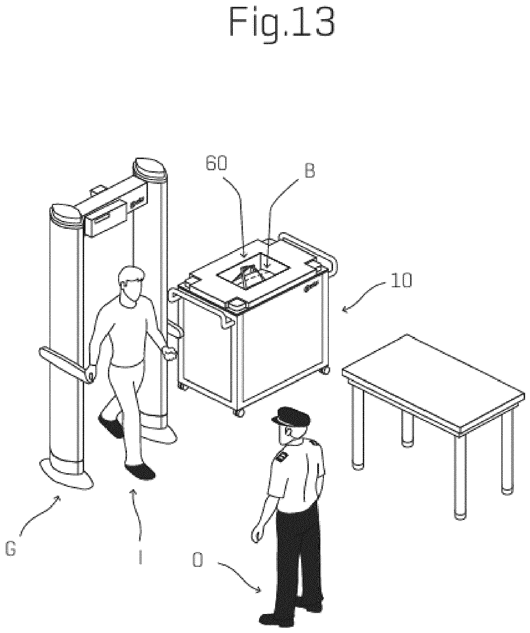

La figure 13 montre l'individu I traversant le portique G. Au cours de cette étape le bagage B placé dans la cavité 60 est analysé automatiquement par la structure d'analyse conforme à l'invention intégrée dans le chariot 10.

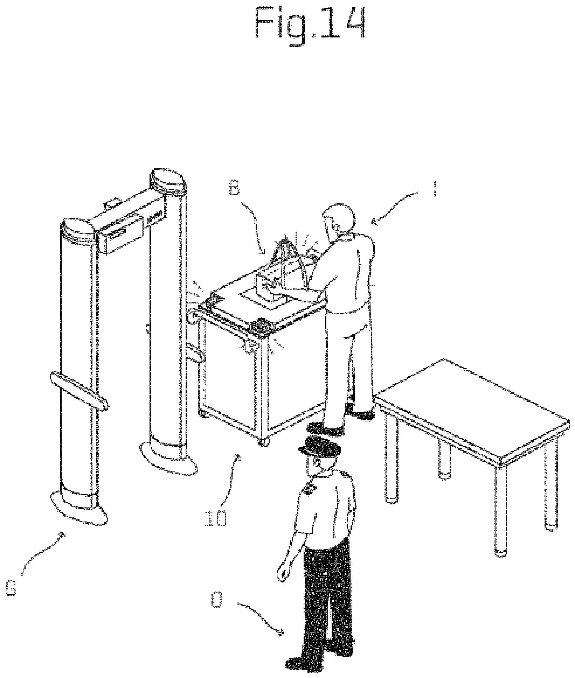

La figure 14 représente l'individu I récupérant son bagage B après avoir traversé le portique G en cas de non détection d'objet suspect dans le bagage B par le chariot 10.

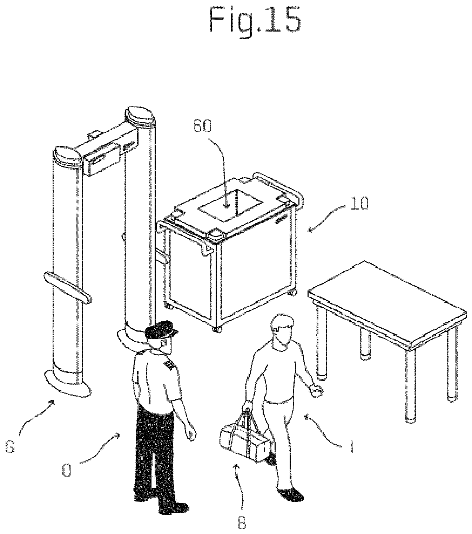

La figure 15 montre l'individu I quittant dans ce cas la zone de contrôle.

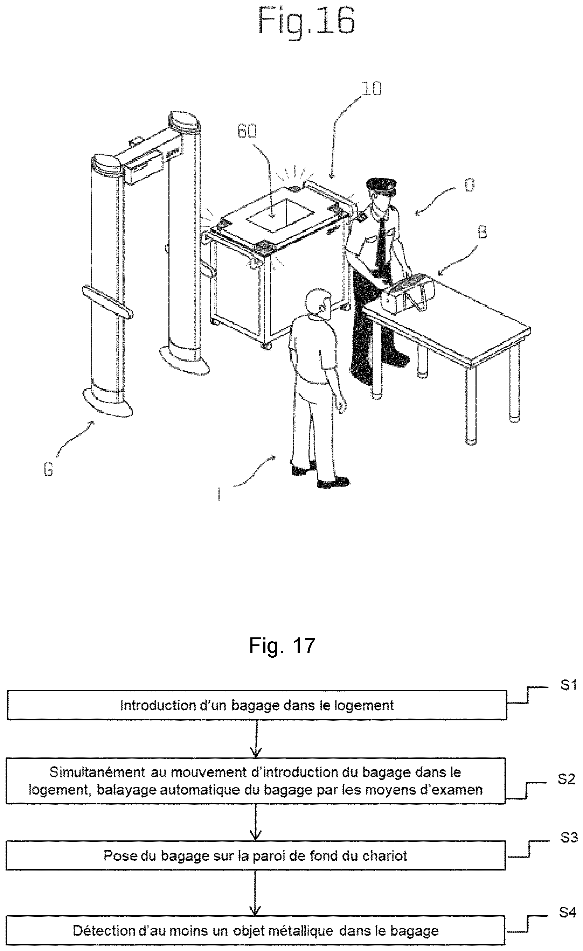

Au contraire, la figure 16 montre un opérateur O procédant à un examen du bagage B après l'étape de la figure 13 lorsque le chariot 10 conforme à l'invention a généré une alarme signalant la présence suspecte d'un objet potentiellement dangereux dans le bagage B.

Le chariot 10 conforme à la présente invention offre notamment les avantages suivants :
- le chariot 10 peut être à faible consommation énergétique,
- le chariot 10 peut être équipé en moyens d'analyse basse tension et d'une batterie électrique rechargeable rendant le chariot autonome.

Le chariot 10 conforme à l'invention ne comprend pas de partie technique ou mécanique mobile pour l'examen du bagage B et présente donc une grande fiabilité.

Le chariot 10 conforme à l'invention n'utilise pas de radiations ionisantes et est donc parfaitement sûr pour les populations examinées ainsi que pour les opérateurs environnants.

Le chariot 10 conforme à l'invention permet une utilisation simple et confortable tant pour les individus I contrôlés que pour les opérateurs professionnels O.

Le chariot 10 ne requiert pas, sauf alarme, d'assistance ou d'opérateur.

Selon une autre caractéristique avantageuse de l'invention, le chariot 10 conforme à l'invention peut être équipé de bacs plastiques ou de sachets plastiques interchangeables dans la cavité 60 pour recevoir le bagage B à contrôler afin de faciliter les opérations de maintenance et de propreté.

Les moyens d'analyse micro-ondes procèdent de préférence par mesure de la constante diélectrique complexe.

Comme on le voit sur la figure 10, l'ensemble des mesures réalisées par les moyens d'examen 100, 200 intégrés au chariot 10, au cours d'une étape 500, à savoir les dimensions géométriques 512 du bagage B, le résultat 514 de la mesure inductive issue des moyens détecteurs de métaux 100, le résultat 516 de l'analyse issue des moyens détecteurs micro-ondes 200 détectant les paramètres diélectriques des objets contenus dans le bagage B et la mesure pondérale 518, ainsi récoltés au cours d'une étape 510, permettent par une recherche de corrélation opérée lors d'une étape 520 de connaître la localisation, la géométrie et les dimensions de matériaux suspects, notamment d'objets métalliques et/ou de substances dangereuses telles que des explosifs et de délivrer si nécessaire une alarme lors d'une étape 530.

Bien entendu, la présente invention n'est pas limitée aux modes de réalisation qui viennent d'être décrits, mais s'étend à toutes variantes conformes à la portée des revendications.

On rappelle que l'invention permet de garantir un balayage complet du bagage sans exiger une instruction particulière à l'attention du propriétaire du bagage, ni une intervention ou manipulation complexe de sa part ou d'un opérateur spécialisé, grâce à la disposition des moyens d'examen à l'entrée du logement de réception.

On rappelle également que l'invention permet de garantir la parfaite intégrité du bagage.

On rappelle enfin que l'invention permet de garantir un examen complet de la totalité du bagage et de protéger le bagage pendant le temps où son propriétaire l'abandonne pour permettre l'examen, du fait que la cavité est adaptée pour englober intégralement le bagage.

## Revendications

1. Système de détection d'objets interdits contenus dans un bagage, comprenant :
un chariot (10) définissant un logement (60), le chariot comprenant une paroi de fond (69) configurée pour recevoir un bagage (B), au moins une paroi latérale (62, 64, 66, 68) comprenant une partie inférieure raccordée à la paroi de fond (69) et une partie supérieure opposée à la partie inférieure et formant une ouverture débouchante, la paroi de fond (69) et l'au moins une paroi latérale (62, 64, 66, 68) délimitant ensemble le logement, et
**caractérisé par le fait qu'**il comprend :
des moyens d'examen (100, 200, 300) comprenant au moins une série de transducteurs micro-ondes (202), lesdits transducteurs micro-ondes (202) étant placés au niveau de la partie supérieure de l'au moins une paroi latérale (62, 64, 66, 68) de sorte que l'introduction du bagage (B) dans le logement (60) induit un déplacement relatif entre le bagage (B) et les moyens d'examen (200) et donc un balayage automatique du bagage (B) par les moyens d'examen (200).

2. Système selon la revendication 1, dans lequel l'ouverture est configurée pour permettre une introduction du bagage dans le logement.

3. Système selon l'une des revendications 1 ou 2, dans lequel le logement est configuré pour englober intégralement le bagage (B) et les moyens d'examen (100, 200, 300, 400) sont placés au niveau de la partie supérieure de l'au moins une paroi latérale de sorte que les moyens d'examen sont susceptibles de balayer automatique tout le bagage (B) lors de son introduction dans le logement.

4. Système selon l'une des revendications 1 à 3, dans lequel le logement a des dimensions au moins égales à 460 mm x 250 mm x 400 mm et de préférence jusqu'à 550 mm x 300 mm x 480 mm.

5. Système selon l'une des revendications 1 à 4, dans lequel le logement est de géométrie parallélépipédique rectangle.

6. Système selon l'une des revendications 1 à 5, dans lequel les moyens d'examen (100, 200, 300) comprennent en outre l'un au moins des moyens suivants : moyens détecteurs de métaux (100), des moyens détecteurs de masse (300), des moyens détecteurs de présence.

7. Système selon l'une des revendications 1 à 6, dans lequel l'au moins une paroi latérale comprend quatre parois opposées (62, 64, 66, 68) deux à deux et les transducteurs micro-ondes (200) sont disposés au niveau d'au moins deux parois opposées (62, 64 ; 66, 68).

8. Système selon l'une des revendications 1 à 7, dans lequel les transducteurs micro-ondes comprennent des émetteurs micro-ondes (202) associés à des cornets de focalisation (204).

9. Système selon l'une des revendications 1 à 8, dans lequel les transducteurs micro-ondes (202) sont disposés sur toute la périphérie de l'ouverture du logement.

10. Système selon l'une des revendications 1 à 9, dans lequel l'au moins une paroi latérale comprend quatre parois (62, 64, 66, 68) opposées deux à deux et les moyens d'examen comprennent en outre des bobinages inductifs disposés au niveau de deux parois (62, 64) opposées pour la détection de métal.

11. Système selon l'une des revendications 1 à 10, comprenant en outre des moyens de mesure de dimensions d'un bagage (B) introduit dans le logement.

12. Système selon la revendication 11, dans lequel les moyens d'analyse procèdent à une normalisation des signaux issus des moyens d'examen en fonction des dimensions du bagage (B) détectées.

13. Procédé de détection d'objets interdits contenus dans un bagage (B) **caractérisé par le fait qu'**il comprend les étapes suivantes :
- S1 : introduction d'un bagage dans le logement d'un système selon l'une des revendications 1 à 12, et
- S2: simultanément au mouvement d'introduction du bagage dans le logement, balayage automatique du bagage (B) par les moyens d'examen (200).

14. Procédé selon la revendication 13, dans lequel, lors de l'étape S1 d'introduction, le bagage (B) est introduit complètement dans le logement.

15. Procédé selon l'une des revendications 13 ou 14, comprenant les étapes suivantes : suite aux étapes S1 d'introduction et S2 de balayage automatique :
- S3 : pose du bagage sur la paroi de fond du chariot et
- S4 : détection d'au moins un objet métallique dans le bagage.

## Patentansprüche

1. System zur Ermittlung verbotener Objekte in einem Gepäckstück, umfassend einen Wagen (10), der eine Aufnahme (60) definiert, wobei der Wagen eine Bodenwand (69) umfasst, die ausgelegt ist, um ein Gepäckstück (B) aufzunehmen, wobei mindestens eine Seitenwand (62, 64, 66, 68) einen unteren Teil umfasst, der mit der Bodenwand (69) verbunden ist, und einen oberen Teil gegenüber dem unteren Teil, der eine ausmündende Öffnung bildet, wobei die Bodenwand (69) und die mindestens eine Seitenwand (62, 64, 66, 68) die Aufnahme gemeinsam begrenzen, und
**dadurch gekennzeichnet, dass** es umfasst:
Prüfmittel (100, 200, 300), die mindestens eine Reihe von Mikrowellenwandlern (202) umfassen, wobei die Mikrowellenwandler (202) im Bereich des oberen Teils der mindestens einen Seitenwand (62, 64, 66, 68) derart platziert sind, dass das Einführen des Gepäckstücks (B) in die Aufnahme (60) eine relative Verschiebung zwischen dem Gepäckstück (B) und den Prüfmitteln (200) und damit eine automatische Abtastung des Gepäckstücks (B) durch die Prüfmittel (200) induziert.

2. System nach Anspruch 1, wobei die Öffnung ausgelegt ist, um ein Einführen des Gepäckstücks in die Aufnahme zu gestatten.

3. System nach einem der Ansprüche 1 oder 2, wobei die Aufnahme ausgelegt ist, um das Gepäckstück (B) vollständig zum umgeben und die Prüfmittel (100, 200, 300, 400) im Bereich des oberen Teils der mindestens einen Seitenwand derart platziert sind, dass die Prüfmittel imstande sind, das gesamte Gepäckstück (B) bei seinem Einführen in die Aufnahme automatisch abzutasten.

4. System nach einem der Ansprüche 1 bis 3, wobei die Aufnahme Abmessungen hat, die mindestens gleich 460 mm x 250 mm x 400 mm und vorzugsweise bis 550 mm x 300 mm x 480 mm betragen.

5. System nach einem der Ansprüche 1 bis 4, wobei die Aufnahme eine rechteckige parallelepipedische Geometrie hat.

6. System nach einem der Ansprüche 1 bis 5, wobei die Prüfmittel (100, 200, 300) ferner mindestens eins von den folgenden Mitteln Metalldetektoren (100), Massedetektoren (300), Präsenzdetektoren umfassen.

7. System nach einem der Ansprüche 1 bis 6, wobei die mindestens eine Seitenwand vier paarweise gegenüberliegende Wände (62, 64, 66, 68) umfasst und die Mikrowellenwandlern (200) im Bereich von mindestens zwei gegenüberliegenden Wänden (62, 64; 66, 68) angeordnet sind.

8. System nach einem der Ansprüche 1 bis 7, wobei die Mikrowellenwandler Mikrowellensender (202) umfassen, die Fokushörnern (204) zugeordnet sind.

9. System nach einem der Ansprüche 1 bis 8, wobei die Mikrowellenwandler (202) auf dem gesamten Umfang der Öffnung der Aufnahme angeordnet sind.

10. System nach einem der Ansprüche 1 bis 9, wobei die mindestens eine Seitenwand vier paarweise gegenüberliegende Wände (62, 64, 66, 68) umfasst und die Prüfmittel ferner induktive Wicklungen umfassen, die im Bereich von zwei gegenüberliegenden Wänden (62, 64) für die Detektion von Metall angeordnet sind.

11. System nach einem der Ansprüche 1 bis 10, umfassend ferner Mittel zum Messen von Abmessungen eines in die Aufnahme eingeführten Gepäckstücks (B).

12. System nach Anspruch 11, wobei die Analysemittel eine Standardisierung der von den Prüfmitteln ausgehenden Signale in Abhängigkeit von den ermittelten Abmessungen des Gepäckstücks (B) durchführen.

13. Verfahren zum Ermitteln verbotener Objekte in einem Gepäckstück (B), **dadurch gekennzeichnet, dass** es die folgenden Schritte umfasst:
- S1: Einführen eines Gepäckstücks in die Aufnahme eines Systems nach einem der Ansprüche 1 bis 12, und
- S2: gleichzeitig mit der Bewegung des Einführens des Gepäckstücks in die Aufnahme automatisches Abtasten des Gepäckstücks (B) durch die Prüfmittel (200).

14. Verfahren nach Anspruch 13, wobei beim Schritt S1 des Einführens das Gepäckstück (B) vollständig in die Aufnahme eingeführt wird.

15. Verfahren nach einem der Ansprüche 13 oder 14, umfassend die folgenden Schritte nach den Schritten S1 des Einführens und S2 des automatischen Abtastens:
- S3: Abstellen des Gepäckstücks auf der Bodenwand des Wagens und
- S4: Ermitteln von mindestens einem metallischen Objekt im Gepäckstück.

## Claims

1. A system for detecting prohibited items contained in luggage, comprising :
a carriage (10) defining a housing (60), the carriage comprising a bottom wall (69) configured to receive a piece of luggage (B), at least one side wall (62, 64, 66, 68) comprising a bottom portion connected to the bottom wall (69) and a top portion opposite the bottom portion and forming a through opening, the bottom wall (69) and the at least one side wall (62, 64, 66, 68) together defining the housing, and
**characterised by** the fact that it includes :
examination means (100, 200, 300) comprising at least one set of microwave transducers (202), said microwave transducers (202) being located at the top of the at least one side wall (62, 64, 66, 68) so that introduction of the baggage (B) into the housing (60) induces relative movement between the baggage (B) and the examination means (200) and hence automatic scanning of the baggage (B) by the examination means (200).

2. The system of claim 1, wherein the opening is configured to allow insertion of the luggage into the housing.

3. A system according to any of claims 1 or 2, wherein the housing is configured to fully encompass the luggage (B) and the examination means (100, 200, 300, 400) are located at the top of the at least one side wall such that the examination means is capable of automatically scanning the entire luggage (B) as it is introduced into the housing.

4. The system of any of claims 1 to 3, wherein the housing has dimensions of at least 460 mm x 250 mm x 400 mm and preferably up to 550 mm x 300 mm x 480 mm.

5. The system of any of claims 1 to 4, wherein the housing is of rectangular parallelepipedal geometry.

6. A system according to any of claims 1 to 5, wherein the examination means (100, 200, 300) further comprise at least one of the following: metal detector means (100), mass detector means (300), presence detector means.

7. The system of any of claims 1 to 6, wherein the at least one sidewall comprises four opposing walls (62, 64, 66, 68) in pairs and the microwave transducers (200) are disposed at at least two opposing walls (62, 64; 66, 68).

8. A system according to any of claims 1 to 7, wherein the microwave transducers comprise microwave transmitters (202) associated with focusing horns (204).

9. A system according to any of claims 1 to 8, wherein the microwave transducers (202) are arranged around the entire periphery of the housing opening.

10. A system according to any of claims 1 to 9, wherein the at least one side wall comprises four walls (62, 64, 66, 68) opposing each other in pairs and the examination means further comprises inductive coils arranged at two opposing walls (62, 64) for metal detection.

11. A system according to any of claims 1 to 10, further comprising means for measuring dimensions of a piece of luggage (B) introduced into the housing.

12. A system as claimed in claim 11, wherein the analysis means normalise the signals from the examination means according to the dimensions of the baggage (B) detected.

13. A method of detecting prohibited objects contained in a piece of luggage (B), **characterised by** the fact that it comprises the following steps:
- S1: introducing a piece of luggage into the housing of a system according to one of claims 1 to 12, and
- S2: simultaneously with the movement of introducing the luggage into the housing, automatic scanning of the luggage (B) by the examination means (200).

14. The method according to claim 13, wherein in the insertion step S1 the luggage (B) is inserted completely into the housing.

15. A method according to any of claims 13 or 14, comprising the following steps: following the steps S1 of introduction and S2 of automatic scanning:
- S3: placement of the luggage on the bottom wall of the trolley and
- S4: detection of at least one metal object in the luggage.
